# EUROPÄISCHE PATENTSCHRIFT

(11) **EP 4 523 846 B1**
(45) Veröffentlichungstag und Bekanntmachung des Hinweises auf die Patenterteilung: **08.10.2025**
(21) Anmeldenummer: 24198813.8
(22) Anmeldetag: 06.09.2024
(51) Int. Cl.: B23Q 11/08

(54) **SCHUTZABDECKUNG**
PROTECTIVE COVER
COUVERCLE DE PROTECTION

(30) Priorität: 14.09.2023 DE 202023105321 U
(43) Veröffentlichungstag der Anmeldung: 19.03.2025
(73) Patentinhaber: MöllerWerke GmbH, 33649 Bielefeld (DE)
(72) Erfinder: Cakmak, Bülent, 33649 Bielefeld (DE)
(74) Vertreter: Schober, Mirko

(56) Entgegenhaltungen:
- DE-A1- 3 027 083
- DE-U1- 202021 100 847
- DE-U1- 202021 105 325

## Beschreibung

Die Erfindung betrifft eine Schutzabdeckung nach dem Oberbegriff des Anspruchs 1.

Schutzabdeckungen dienen der Begrenzung sowie Abdeckung von Arbeitsräumen. Wegen ihrer mechanischen Belastbarkeit werden sie bevorzugt zur Abschirmung beweglicher Maschinenbauteile eingesetzt. Dabei erfüllen sie primär die sich bereits aus Sicherheitsgründen oder/und dem Schutz vor Verschmutzungen ergebenden Aufgaben, wie etwa als bauliche Barriere gegenüber Spänen, Schmierstoffen oder Kühlmitteln. Je nach Einsatzzweck können diese aus einem Innen- sowie Außenfalten aufweisenden Faltenbalg bestehen oder einen daraus gebildeten längenveränderbaren Basiskörper umfassen. Ohne einen Faltenbalg auskommende Ausführungsformen (faltenbalglos) weisen sich zumindest teilweise überdeckende und zumeist quer zu ihrer Längsrichtung relativ zueinander bewegliche Abschirmelemente auf. Bei den Abschirmelementen kann es sich beispielsweise um Lamellen aus Blech oder einem anderen geeigneten Material handeln. Verbundwerkstoffe aus wenigstens zwei voneinander unterschiedlichen Materialien sind ebenfalls möglich.

Die eingesetzten Abschirmelemente weisen zumeist eine durchgehende oder zumindest abschnittsweise im Querschnitt L-förmige Ausgestaltung auf. Der L-förmige Querschnitt umfasst somit wenigstens zwei gegeneinander abgewinkelte Schenkel. Während die sich zumindest teilweise überdeckenden ersten Schenkel der Abschirmelemente eine geschlossene Abschirmfläche ausbilden, sind die Deckflächen deren jeweils zweiten Schenkel einander zugewandt. Die Längenänderbarkeit der Schutzabdeckung basiert dabei auf den zumindest begrenzt variierbaren Abständen zwischen den zweiten Schenkeln. Um die zur Beibehaltung der Abschirmfläche nötige Überdeckung der ersten Schenkel sowie den Zusammenhalt der Schutzabdeckung insgesamt zu gewährleisten, sind deren einzelne Abschirmelemente untereinander verkettet. Dies kann durch eine bewegliche Kopplung der sich jeweils unmittelbar gegenüberliegenden zweiten Schenkel über spezielle Verbinder erfolgen. Die ersten Schenkel können daher auch als Abdeckschenkel und die zweiten Schenkel als Befestigungsschenkel bezeichnet werden. Bei den Verbindern kann es sich um Federelemente handeln, deren Federwiderstand entweder in oder gegen die Richtung der möglichen Annäherung der zweiten Schenkel gerichtet ist. Im Ergebnis wird so entweder die Längung oder die Verkürzung der durch die ersten Schenkel gebildeten Abschirmfläche über die Verbinder zumindest unterstützt. Gleichzeitig können zumindest einige dieser Verbinder dazu ausgebildet sein, die Entfernung zweier unmittelbar benachbarter zweiter Schenkel der Abschirmelemente zu begrenzen, so dass die Abschirmfläche auch in der maximal möglichen Auszugslänge der Schutzabdeckung stets in sich geschlossen bleibt.

Um eine möglichst kompakte Verkürzung der Schutzabdeckung zu erhalten (Zusammendrückmaß), müssen deren Verbinder entsprechende Anforderungen erfüllen. Diese sollten hierzu eine größtmögliche Annäherung der über sie verbundenen zweiten Schenkel der Abschirmelemente ermöglichen.

Da die Verbinder in der Regel zwischen den zweiten Schenkeln der Abschirmelemente angeordnet sind, ist daher deren möglichst flach bauende Ausgestaltung gewünscht.

Aus DE 20 2021 100 847 U1 und DE 20 2021 105 325 U1 sind Schutzabdeckungen mit den vorgenannten Merkmalen bekannt, deren Verbinder einen Mittelsteg mit mindestens zwei an diesem schwenkbar angeordneten Armen aufweisen. Dabei zeigt DE 20 2021 100 847 U1 eine Verbindung der zweiten Schenkel der Abschirmelemente mit den Verbindern ausschließlich über die Arme der einzelnen Verbinder, wobei deren Mittelstege keinerlei Verbindung mit den zweiten Schenkeln der Abschirmelemente aufweisen. DE 20 2021 105 325 U1 offenbart demgegenüber eine ausschließliche Verbindung der zweiten Schenkel der Abschirmelemente mit den Mittelstegen der einzelnen Verbinder, während die einzelnen Verbinder über ihre Arme untereinander verbunden sind.

Durch die Ausgestaltung der Verbinder sowie deren Kopplung mit den einzelnen Abschirmelementen erreichen die vorbekannten Schutzabdeckungen im vollständig eingefahrenen Zustand bereits sehr kompakte Abmessungen. Um im vollständig auseinandergezogenen Zustand der Schutzabdeckung eine ausreichende Beabstandung zwischen zwei Abschirmelementen zu erhalten, sind jeweils zwei miteinander gekoppelte Verbinder (DE 20 2021 105 325 U1) oder aber entsprechend lange Arme notwendig.

Der vorliegenden Erfindung liegt daher die Aufgabe zugrunde, eine Schutzabdeckung dahingehend weiterzuentwickeln, dass diese ein weiter reduzierbares Zusammendrückmaß ermöglicht und eine möglichst einfache Herstellung sowie Einbindung ihrer Verbinder erlaubt.

Diese Aufgabe wird durch eine Schutzabdeckung mit den Merkmalen des Anspruchs 1 gelöst. Vorteilhafte Ausführungsformen finden sich in den Unteransprüchen.

Erfindungsgemäß wird eine Schutzabdeckung vorgeschlagen, bei welcher der Mittelsteg eines Verbinders mit dem zweiten Schenkel eines Abschirmelements verbunden ist, während wenigstens ein Arm dieses Verbinders mit dem zweiten Schenkel eines unmittelbar benachbarten Abschirmelements verbunden ist. Mit anderen Worten ist der Verbinder in Bezug auf zwei unmittelbar zueinander benachbarte Abschirmelemente somit einerseits durch seinen Mittelsteg mit dem einen Abschirmelement und durch wenigstens einen Arm mit dem anderen **Ab**schirmelement verbunden.

Ein solcher Verbinder ermöglicht durch den Wegfall der ansonsten mitunter notwendigen Kopplung mit einem weiteren Verbinder eine überaus einfache Einbindung innerhalb der Schutzabdeckung, da dieser direkt mit dem jeweils zweiten Schenkel zweier unmittelbar benachbarter Abschirmelemente zu verbinden ist.

Bevorzugt kann der Mittelsteg eines Verbinders nur zwei an diesem schwenkbar angeordnete Arme aufweisen.

In Bezug auf die Lage der Arme am Mittelsteg eines Verbinders wird es als besonders vorteilhaft angesehen, wenn, insbesondere wenigstens, ein Arm im Bereich, bevorzugt an, einer Kante des Mittelstegs angeordnet ist, während, insbesondere wenigstens, ein anderer Arm desselben Verbinders im Bereich, bevorzugt an, einer dieser Kante abgewandten Kante des Mittelstegs angeordnet ist. Auf diese Weise können sich zwei am Mittelsteg angelenkte Arme gegenüberliegen.

Nach einer bevorzugten Weiterbildung des Erfindungsgedankens kann der Mittelsteg wenigstens eines Verbinders einen Auslegerbereich aufweisen, durch den der Mittelsteg dann mit dem zweiten Schenkel eines Abschirmelements verbunden ist. Durch den Auslegerbereich ist es möglich, die Arme des Verbinders entsprechend weit von dem zweiten Schenkel des Abschirmelements zu beabstanden.

In besonders bevorzugter Weise sieht die Erfindung vor, dass wenigstens ein, bevorzugt jeder, Arm eines Verbinders einen ersten Armabschnitt und einen zweiten Armabschnitt besitzen kann, wobei die beiden Armabschnitte des Arms durch einen Zwischensteg beweglich miteinander verbunden sind. Auf diese Weise ist der so ausgestaltete Arm in sich beweglich.

Hierauf aufbauend wird es als vorteilhaft angesehen, wenn wenigstens ein Arm, bevorzugt alle Arme eines Verbinders jeweils durch ihren ersten Armabschnitt mit dem zugehörigen Mittelsteg verbunden sind.

Grundsätzlich wird es als vorteilhaft angesehen, wenn die beiden Armabschnitte des oder eines Arms an derselben Kante des zugehörigen Zwischenstegs angeordnet sind.

Besonders bevorzugt ist eine zueinander versetze Anordnung der beiden Armabschnitte eines Arms an dem zugehörigen Zwischen-steg derart, dass die beiden Armabschnitte dieses Arms jeweils in einer von zwei, insbesondere sich parallel zueinander erstreckenden, Ebenen schwenkbar sind.

Vorteilhafterweise können die ersten Armabschnitte wenigstens zweier Arme oder der zwei Arme desselben Verbinders in einer gemeinsamen Ebene schwenkbar sein.

Alternativ oder ergänzend können die zweiten Armabschnitte wenigstens zweier Arme oder der zwei Arme desselben Verbinders in einer gemeinsamen Ebene schwenkbar sein.

Unter dem Begriff Ebene wird im Sinne der Erfindung eine geometrische Ebene verstanden.

Nach einer vorteilhaften Weiterbildung kann wenigstens ein Arm eines Verbinders einen, bevorzugt schwenkbaren, freien Endabschnitt aufweisen. Der Endabschnitt kann am zweiten Armabschnitt dieses Arms angeordnet sein. Jedenfalls kann der Arm durch seinen freien Endabschnitt mit dem zweiten Schenkel eines Abschirmelements verbunden sein.

Die Erfindung sieht in besonders bevorzugter Weise vor, dass der zweite Schenkel wenigstens eines Abschirmelements mindestens eine zur, insbesondere indirekten, Verbindung mit wenigstens einem Verbinder ausgebildete Durchgangsöffnung besitzen kann.

Hierauf aufbauend können in vorteilhafter Weise die Mittelstege zweier Verbinder durch dessen oder eine seiner Durchgangsöffnung/en hindurch miteinander verbunden sein. Dies erfolgt dann unter Eingliederung eines Bereichs des zweiten Schenkels zwischen diesen Verbindern.

Alternativ oder, bevorzugt, ergänzend können die Arme zweier Verbinder unter Eingliederung eines Bereichs des zweiten Schenkels durch dessen oder eine seiner Durchgangsöffnung/en hindurch miteinander verbunden sein. Vorteilhafterweise können auf diese Weise die freien Endabschnitte der Arme miteinander verbunden sein.

Die Erfindung sieht vor, dass die Durchgangsöffnungen der Abschirmelemente zueinander versetzt an diesen ausgebildet beziehungsweise angeordnet sind. Konkret meint dies eine in Bezug auf eine Längsrichtung der einzelnen Abschirmelemente versetzte Anordnung wenigstens einiger ihrer Durchgangsöffnungen derart, dass eine Durchgangsöffnung wenigstens eines Abschirmelements zwischen zwei Durchgangsöffnungen eines unmittelbar benachbarten Abschirmelements gelegen sein kann. Dies ermöglicht eine ideale Verbindung zwischen den Abschirmelementen und den Verbindern, insbesondere in Bezug auf deren erfindungsgemäße Ausgestaltung.

Nach einer besonders vorteilhaften Weiterbildung der Erfindung ist vorgesehen, dass die Mittelstege oder/und die Arme zweier Verbinder, insbesondere deren freien Endabschnitte, zumindest bereichsweise stoffschlüssig miteinander verbunden sein können. Bei einer solchen stoffschlüssigen Verbindung kann es sich vorzugsweise um eine Verschweißung handeln. Diese kann bevorzugt als Ultraschallverschweißung ausgeführt sein. Alternativ oder ergänzend kann die stoffschlüssige Verbindung auch durch eine Verklebung ausgeführt sein. Eine Kombination der rein beispielhaft genannten Verbindungsarten kann sich auf unterschiedliche Bereiche der so miteinander verbundenen Verbinder beschränken.

In besonders vorteilhafter Weise kann im Bereich mindestens einer Durchgangsöffnung des zweiten Schenkels eines Abschirm-elements zumindest ein Positioniermittel vorgesehen sein. Das Positioniermittel dient dabei zur Lageausrichtung des Mittel-stegs oder/und eines Arms, insbesondere seines freien Endabschnitts, eines Verbinders an dem zweiten Schenkel eines Abschirmelements. Dies erleichtert die exakte Lagebestimmung der Verbinder an den Abschirmelementen, um deren einheitliche Anordnung sowie Ausrichtung zu erhalten, was maßgeblich für eine sichere Funktion der Schutzabdeckung ist. Wenigstens eines der Positioniermittel kann an dem zweiten Schenkel eines Abschirmelements ausgebildet oder/und angeordnet sein.

Alternativ oder ergänzend kann grundsätzlich an wenigstens einem der Verbinder zumindest ein an diesem ausgebildetes oder/und angeordnetes Positioniermittel vorgesehen sein.

Wenigstens eines, bevorzugt jedes, der vorgenannten Positioniermittel kann in vorteilhafter Weise durch ein Durchgangsloch gebildet sein oder ein solches aufweisen.

Alternativ oder ergänzend kann das oder wenigstens ein Positioniermittel durch eine randseitige Ausnehmung gebildet sein oder eine solche aufweisen.

Die Erfindung sieht vor, dass wenigstens einer oder jeder der Verbinder aus einem plattenförmigen Grundkörper gebildet sein kann. Der, insbesondere jeweilige, Grundkörper kann dann bevorzugt durch bereichsweise Durchtrennungen in einzelne Bereiche aufgeteilt sein. Durch die Anordnung der Durchtrennungen können auf einfache Weise beispielsweise die Arme eines Verbinders ausgebildet sein.

Auch wenn der Grundkörper diverse Dicken aufweisen kann, deren Wahl der Fachmann für den jeweiligen Anwendungsfall festlegen wird, kann dieser bevorzugt eine Dicke von 0,5 mm bis 1,5 mm aufweisen.

Mit Blick auf die vorgenannten Durchtrennungen kann wenigstens eine der Durchtrennungen durch Schneiden oder/und durch Stanzen oder/und durch Fräsen gebildet sein. Selbstverständlich ist alternativ oder ergänzend ein zumindest teilweises Sägen des Grundkörpers denkbar.

Erfindungsgemäß kann wenigstens ein Verbinder mindestens eine Biegelinie aufweisen, entlang der dann zumindest ein Teil des Verbinders gegenüber einem anderen Teil desselben Verbinders schwenkbar ist.

Die oder wenigstens eine der Biegelinien kann durch ein, insbesondere lückenloses, Filmscharnier gebildet sein.

Alternativ oder ergänzend kann die oder wenigstens eine Biegelinie durch eine in das Material des Verbinders hinein gerichtete Prägung oder/und Querschnittskomprimierung gebildet sein.

Weiter alternativ oder ergänzend kann die oder wenigstens eine Biegelinie durch einen begrenzten Materialabtrag gebildet sein.

Bevorzugt kann wenigstens eine der Biegelinien sich entlang eines zumindest teilweisen Materialabtrags oder/und einer Aneinanderreihung von sich durch den Grundkörper hindurch erstreckenden Perforationsöffnungen erstrecken.

Grundsätzlich sieht die Erfindung vor, dass die Abschirmelemente aus einem Metall gebildet sein können oder/und dass die Verbinder aus einem Kunststoff gebildet sind oder wenigstens einen solchen aufweisen. Bei dem Kunststoff kann es sich beispielsweise um Polyamid oder Polypropylen oder Polypropylen-Copolymer oder Polyethylen handeln, um nur einige Beispiele einer nicht abschließenden Aufzählung hierfür möglicher Kunststoffe zu nennen.

Besonders bevorzugt können die Verbinder baugleich gestaltet sein, was deren überaus einfache und kostengünstige Herstellung ermöglicht.

Vorzugsweise können die Arme zweier über diese miteinander verbundenen Verbinder, insbesondere in einem zumindest teilweise auseinandergezogenen Zustand der Schutzabdeckung, in voneinander unterschiedliche Richtungen gegenüber dem zugehörigen Mittelsteg verschwenkt sein.

Grundsätzlich wird es als vorteilhaft angesehen, wenn die freien Endabschnitte wenigstens eines Verbinders einander zugewandt sind.

Die erfindungsgemäße Schutzabdeckung ermöglicht ein überaus kompaktes Zusammendrückmaß bei gleichzeitig verringertem Gewicht und wirtschaftlicher Herstellungsweise. Insbesondere die ohne den Einsatz zusätzlicher Verbindungsmittel mögliche Kopplung der Verbinder mit den Abschirmelementen durch deren Durchgangsöffnungen hindurch mittels stoffschlüssiger Verbindungen trägt maßgeblich hierzu bei. Gegenüber beispielsweise genieteten Verbindungen zeigt vor allem die erfindungsgemäße Schweißverbindung eine deutlich höhere Reißfestigkeit, wo-durch sich die Belastbarkeit sowie Haltbarkeit der Schutzabdeckung maßgeblich erhöht.

Die Erfindung wird nachfolgend anhand eines in den Figuren 1 bis 5 dargestellten Ausführungsbeispiels näher erläutert.

Es zeigen:
- Figur 1 -: eine erfindungsgemäße Schutzabdeckung in einer perspektivischen Darstellungsweise,
- Figur 2 -: einen einzelnen Verbinder der Schutzabdeckung aus Figur 1 in einer zweidimensionalen Aufsicht,
- Figur 3a -: den Verbinder der Schutzabdeckung aus Figur 1 in einer ersten Biegeform in perspektivischer Darstellungsweise,
- Figur 3b -: den Verbinder der Schutzabdeckung aus Figur 1 in einer zweiten Biegeform in perspektivischer Darstellungsweise,
- Figur 4 -: einen auf zwei Abschirmelemente reduzierten Ausschnitt der Schutzabdeckung aus Figur 1 in ebenfalls perspektivischer Darstellungsweise sowie
- Figur 5 -: die Schutzabdeckung aus Figur 1 in einer zweidimensionalen Ansicht.

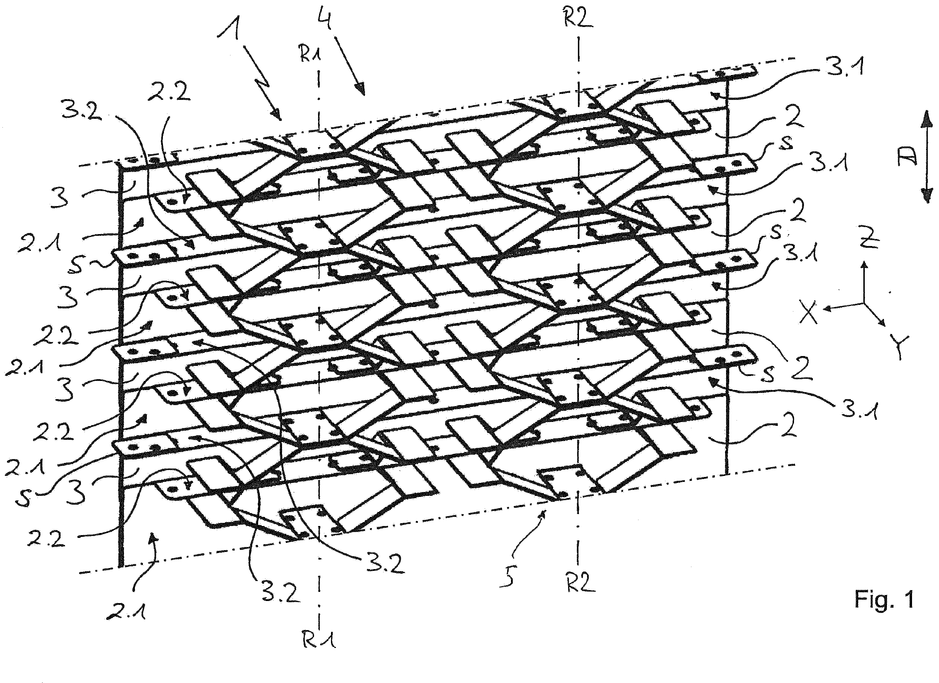

Figur 1 zeigt eine erfindungsgemäße Schutzabdeckung 1 in einer perspektivischen Darstellungsweise. Die Schutzabdeckung 1 umfasst eine Vielzahl an sich parallel zueinander, jeweils in eine Längsrichtung X erstreckende Abschirmelemente 2, 3. Vorzugsweise können diese aus einem Metall gebildet sein. Die Abschirmelemente 2, 3 weisen jeweils zumindest abschnittsweise einen L-förmigen Querschnitt auf, so dass jedes dieser Abschirmelemente 2, 3 einen ersten Schenkel 2.1, 3.1 und einen gegenüber dem ersten Schenkel 2.1, 3.1 abgewinkelten zweiten Schenkel 2.2, 3.2 besitzt. Dabei liegen die Deckflächen der zweiten Schenkel 2.2, 3.2 der Abschirmelemente 2, 3 so einander gegenüber, dass sich deren ersten Schenkel 2.1, 3.1 zumindest teilweise unter Ausbildung einer in eine Längenänderungsrichtung A der Schutzabdeckung 1 längenveränderlichen Abschirmfläche 4 überdecken. Die Breite der zweiten Schenkel 2.2, 3.2 erstreckt sich dabei jeweils parallel zu einer Querrichtung Y, während sich die Breite der ersten Schenkel 2.1, 3.1 jeweils parallel zu einer Hochrichtung Z erstreckt.

An dem jeweils zweiten Schenkel 2.2, 3.2 jedes Abschirmelements 2, 3 sind vorliegend rein beispielhaft jeweils zwei Verbinder 5 angeordnet, durch welche die einzelnen Abschirmelemente 2, 3 gekoppelt und so relativ zueinander beweglich miteinander verkettet sind. Die einzelnen Verbinder 5 sind ebenfalls rein beispielhaft in zwei, insbesondere parallel zur Hochrichtung Z verlaufenden, Reihen R1, R2 angeordnet. In der gezeigten Ausführungsform der Schutzabdeckung 1 weisen die einzelnen Verbinder 5 allesamt die gleiche Ausgestaltung auf, so dass diese baugleich sind. Selbstverständlich können diese auch in einer hier nicht gezeigten Ausführungsform mit sich von diesen unterscheidenden Verbinder kombiniert sein.

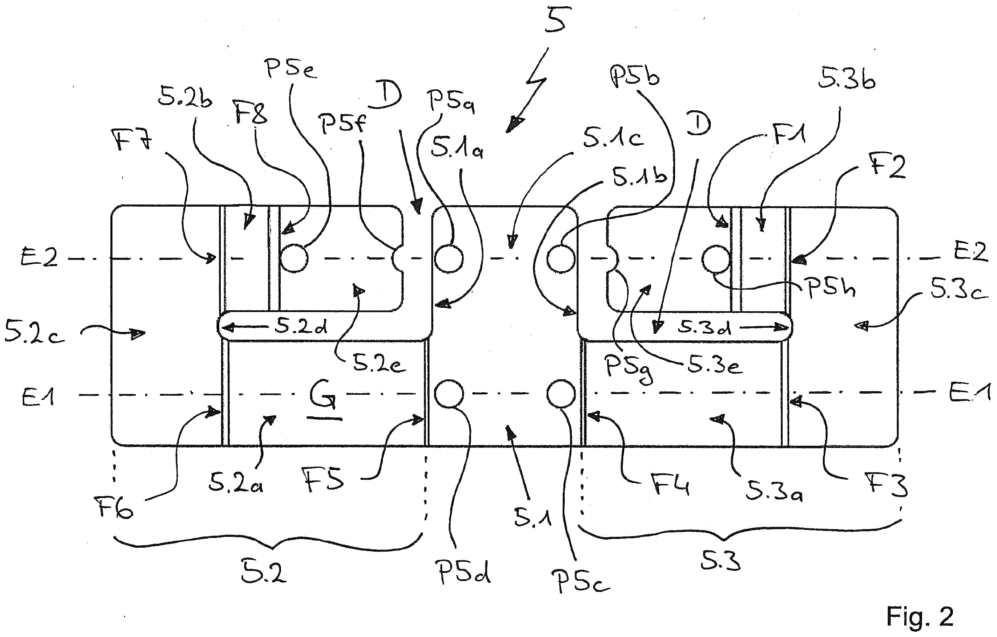

Figur 2 zeigt die Form eines der Verbinder 5 in einer zweidimensionalen Aufsicht, welche stellvertretend für alle anderen baugleichen Verbinder 5 nun näher beschrieben wird. Bevorzugt kann der Verbinder 5 aus einem Kunststoff gebildet sein oder einen solchen aufweisen. Bei dem Kunststoff kann es sich beispielsweise um Polyamid oder Polypropylen oder Polypropylen-Copolymer oder Polyethylen handeln. Erkennbar ist der Verbin-der 5 aus einem plattenförmigen Grundkörper G gebildet. Dieser weist bereichsweise einzelne Durchtrennungen D auf, so dass der Grundkörper G in einzelne Bereiche aufgeteilt ist. Rein beispielhaft kann der hier gezeigte Grundkörper G eine Dicke von 0,5 mm bis 1,5 mm aufweisen. Die Durchtrennungen D können beispielsweise durch Schneiden oder/und Stanzen oder/ und Fräsen des Grundkörpers G gebildet beziehungsweise in diesen eingebracht sein.

Mehrere an dem Grundkörper G vorhandene, z. B. angebrachte beziehungsweise eingebrachte Biegelinien F1 - F8 ermöglichen eine entsprechende Beweglichkeit. Auf diese Weise sind einzelne Teile des Verbinders 5 gezielt entlang seiner Biegelinien F1 - F8 gegenüber anderen Teilen desselben Verbinders 5 schwenkbar ausgestaltet. Wenigstens eine der Biegelinien F1 - F8 kann durch ein, insbesondere lückenloses, Filmscharnier gebildet sein. Alternativ oder ergänzend kann wenigstens eine der Biegelinien F1 - F8 durch eine in das Material des Verbinders 5 hinein gerichtete Prägung oder/und Querschnittskomprimierung gebildet sein. Weiter alternativ oder ergänzend kann wenigstens eine der Biegelinien F1 - F8 durch einen begrenzten Materialabtrag gebildet sein. Wenigstens eine der Biegelinien F1 - F8 kann sich entlang eines zumindest teilweisen Materialabtrags oder/und einer - hier nicht näher gezeigten - Aneinanderreihung von sich durch den Grundkörper G hindurch erstreckenden Perforationsöffnungen erstrecken.

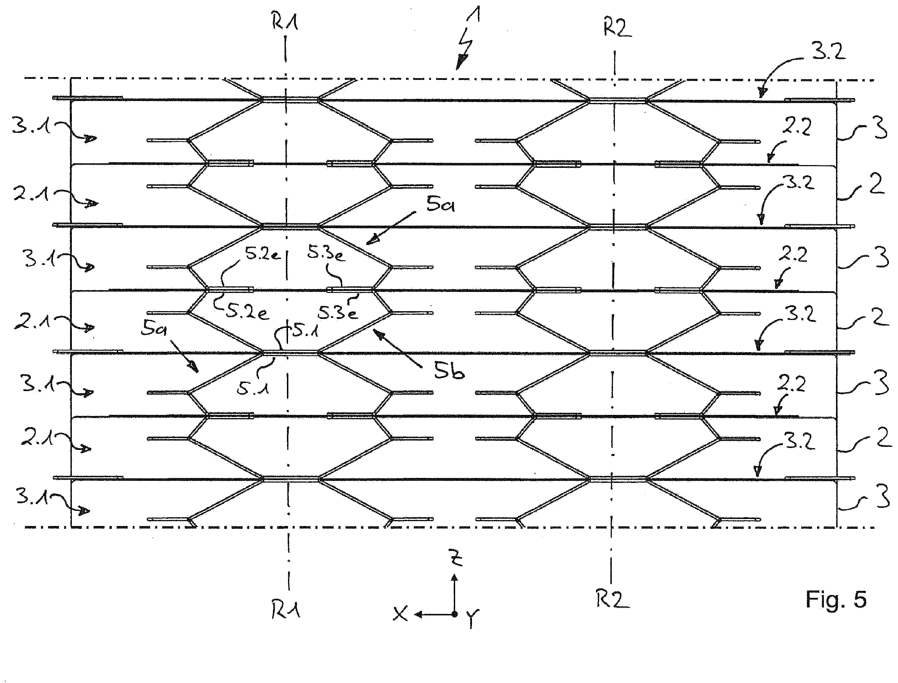

Aufgrund der Durchtrennungen D ist der Verbinder 5 in einen Mittelsteg 5.1 und - in dem hier gezeigten Ausführungsbeispiel - genau zwei Arme 5.2, 5.3 aufgeteilt, welche, insbesondere wegen zwei der Biegelinien F4, F5, schwenkbar an dem Mittelsteg 5.1 angeordnet sind. Ersichtlich ist einer der Arme 5.2 an oder im Bereich einer Kante 5.1a des Mittelstegs 5.1 angeordnet, während der andere Arm 5.3 an oder im Bereich einer dieser Kante 5.1a abgewandten Kante 5.1b des Mittel-stegs 5.1 gelegen ist. Der Mittelsteg 5.1 selbst weist einen Auslegerbereich 5.1c auf, durch den der Mittelsteg 5.1 mit dem zweiten Schenkel 2.2, 3.2 eines Abschirmelements 2, 3 verbunden ist (siehe Fig. 1 und Fig. 5).

Mit Blick auf die beiden Arme 5.2, 5.3 wird deutlich, dass diese jeweils einen ersten Armabschnitt 5.2a, 5.3a und einen zweiten Armabschnitt 5.2b, 5.3b besitzen. Beide Arme 5.2, 5.3 sind jeweils durch ihren ersten Armabschnitt 5.2a, 5.3a mit dem Mittelsteg 5.1 verbunden. Der jeweils erste Armabschnitt 5.2a, 5.3a und der jeweils zweite Armabschnitt 5.2b, 5.3b jedes Arms 5.2, 5,3 sind durch einen Zwischensteg 5.2c, 5.3c beweglich miteinander verbunden. Erkennbar sind beide Armabschnitte 5.2a, 5.2b; 5.3a, 5.3b eines Arms 5.2, 5.3 an derselben Kante 5.2d, 5.3d des zugehörigen Zwischenstegs 5.2c, 5.3c gelegen. Dabei sind die beiden Armabschnitte 5.2a, 5.2b; 5.3a, 5.3b eines Arms 5.2, 5.3 an dem zugehörigen Zwischen-steg 5.2c, 5.3c derart versetzt zueinander angeordnet, dass die beiden Armabschnitte 5.2a, 5.2b; 5.3a, 5.3b jeweils in einer von zwei, insbesondere sich parallel zueinander erstreckenden, Ebenen E1, E2 schwenkbar sind. Aufgrund dieser Anordnung sind die ersten Armabschnitte 5.2a, 5.3a jedes Arms 5.2, 5.3 in einer gemeinsamen ersten Ebene E1 und die zweiten Armabschnitte 5.2b, 5.3b jedes Arms 5.2, 5.3 in einer gemeinsamen zweiten Ebene E2 schwenkbar. Der zweite Armabschnitt 5.2b, 5.3b jedes Arms 5.2, 5.3 weist jeweils einen freien Endabschnitt 5.2e, 5.3e auf, welcher dazu vorgesehen ist, den Verbinder 5 mit dem zweiten Schenkel 2.2, 3.2 eines Abschirmelements 2, 3 zu verbinden (siehe Fig. 1 und Fig. 5). Ersichtlich sind die freien Endabschnitt 5.2e, 5.3e einander zugewandt.

An dem Verbinder 5 sind vorliegend - und daher rein beispielhaft - insgesamt acht an diesem ausgebildete oder/und angeordnete Positioniermittel P5a - P5d, P5e - P5h vorgesehen, von denen insgesamt vier Positioniermittel P5a - P5d an dem Mittelsteg 5.1 gelegen sind. Die übrigen vier Positioniermittel P5e, P5f; P5g, P5h sind jeweils zu zweit an dem freien Endabschnitt 5.2e, 5.3e jedes Arms 5.2, 5.3 gelegen. Die vier an dem Mittelsteg 5.1 sowie die zwei an jeweils einem der beiden freien Endabschnitt 5.2e, 5.3e der Arme 5.2, 5.3 im Bereich der - den jeweiligen freien Endabschnitt 5.2e, 5.3e gegenüber seinem zugehörigen zweiten Armabschnitt 5.2b. 5.3b abgrenzenden - Biegelinie F1, F8 gelegenen insgesamt sechs Positioniermittel P5a - P5d; P5e, P5h sind jeweils durch ein Durchgangsloch gebildet. Demgegenüber sind die am jeweiligen Ende der beiden freien Endabschnitte 5.2e, 5.3e gelegenen Positioniermittel P5f, P5g erkennbar jeweils durch eine randseitige Ausnehmung gebildet.

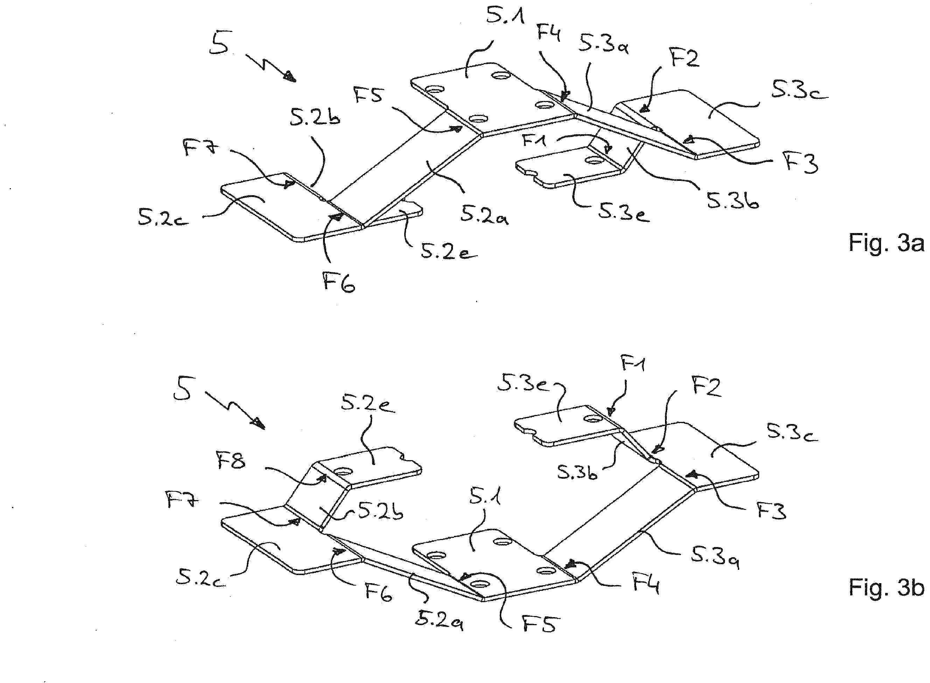

Figuren 3a und 3b ist ein baugleicher, wie zuvor in Bezug auf Figur 2 näher beschriebener, Verbinder 5 in perspektivischer Darstellung zu entnehmen, welcher jeweils eine unterschiedliche Biegeform aufweist:
Figur 3a zeigt den Verbinder 5 mit in Bezug auf die Darstellung nach unten verschwenkten Armen 5.2, 5.3. Hierzu sind deren ersten Armabschnitte 5.2a, 5.3a jeweils entlang der zugehörigen Biegelinie F4, F5 nach unten geneigt, so dass die Zwischenstege 5.2c, 5.3c unterhalb einer Ebene gelegen sind, innerhalb der sich der Mittelsteg 5.1 erstreckt. Die Zwi-schenstege 5.2c, 5.3c und der Mittelsteg 5.1 verlaufen dabei im Wesentlichen weiterhin parallel zueinander. Dies hängt von dem sich beim Abwinkeln entlang der Biegelinien F4, F5 einstellenden Drehmoment innerhalb des Materials ab und kann sich im bestimmungsgemäßen Einsatz somit auch anders darstellen, beispielsweise in einer leichten Neigung der Zwischen-stege 5.2c, 5.3c gegenüber dem Mittelsteg 5.1, was allerdings keinen Einfluss auf die angedachte Funktionsweise des Verbinders 5 hat. Auch die zweiten Armabschnitte 5.2b, 5.3b jedes Arms 5.2, 5.3 sind gegenüber dem jeweils zugehörigen Zwischensteg 5.2c, 5.3c entlang der zugehörigen Biegelinie F2, F7 nach unten geneigt, während deren freien Endabschnitte 5.2e, 5.3e sich weiterhin parallel zum Mittelsteg 5.1 erstrecken, indem diese entlang der Biegelinien F1, F8 gegenüber dem zugehörigen zweiten Armabschnitte 5.2b, 5.3b entsprechend abgewinkelt sind.

Figur 3b zeigt den Verbinder 5 mit in Bezug auf die Darstellung nach oben verschwenkten Armen 5.2, 5.3. Hierzu sind deren ersten Armabschnitte 5.2a, 5.3a jeweils entlang der zugehörigen Biegelinie F4, F5 nach oben geneigt, so dass die Zwischenstege 5.2c, 5.3c oberhalb der Ebene gelegen sind, innerhalb der sich der Mittelsteg 5.1 erstreckt. Die Zwi-schenstege 5.2c, 5.3c und der Mittelsteg 5.1 verlaufen dabei im Wesentlichen weiterhin ebenfalls parallel zueinander, wobei auch hier das hinsichtlich der Zwischenstege 5.2c, 5.3c und deren mögliche Neigung bereits zu Figur 3a Gesagte gilt. Auch die zweiten Armabschnitte 5.2b, 5.3b jedes Arms 5.2, 5.3 sind gegenüber dem jeweils zugehörigen Zwischensteg 5.2c, 5.3c entlang der zugehörigen Biegelinie F2, F7 nach oben geneigt, während deren freien Endabschnitte 5.2e, 5.3e sich weiterhin parallel zum Mittelsteg 5.1 erstrecken, indem diese entlang der Biegelinien F1, F8 gegenüber dem zugehörigen zweiten Armabschnitte 5.2b, 5.3b entsprechend abgewinkelt sind.

Die beiden Formen des Verbinders 5 aus Figuren 3a und 3b zeigen diesen jeweils in seiner Einbausituation innerhalb der Schutzabdeckung 1 in deren zumindest teilweise auseinandergezogenem Zustand.

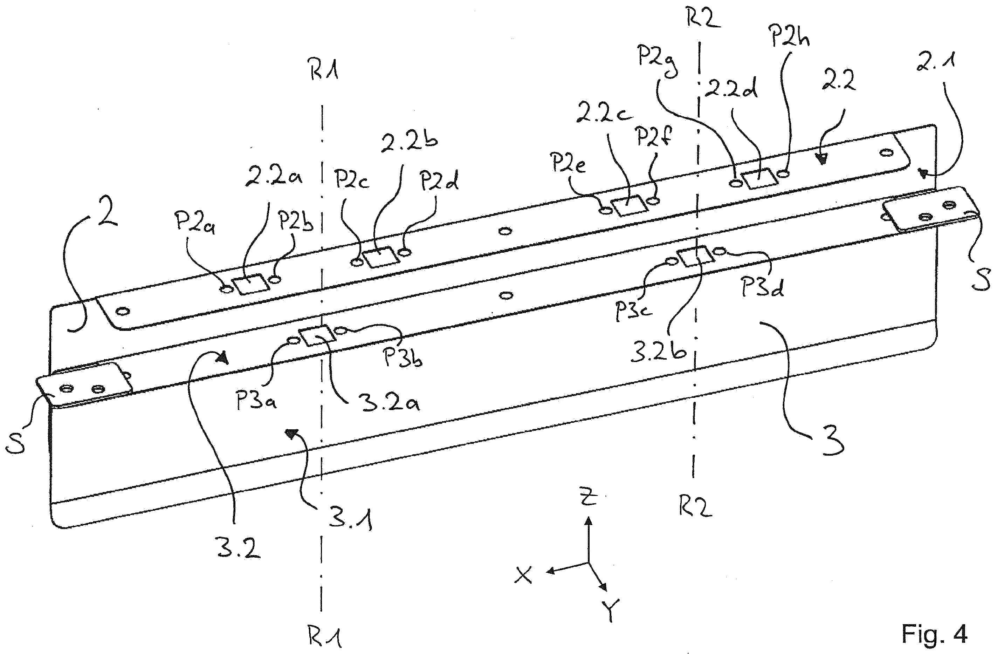

Figur 4 ist ein - aufgrund der so besseren Übersichtlichkeit - auf nur zwei Abschirmelemente 2, 3 reduzierter Ausschnitt der Schutzabdeckung 1 aus Figur 1 in perspektivischer Darstellungsweise zu entnehmen. Anhand dieser soll stellvertretend für die übrigen Abschirmelemente 2, 3 nachfolgend deren jeweiliger Aufbau näher beschrieben werden:
Die Abschirmelemente 2, 3 weisen bevorzugt allesamt die gleiche Grundform auf. Es kann aber auch Abschirmelemente 2, 3 mit abweichender Form geben, z. B. an den Enden der Schutzabdeckung. Einzig deren gegenüber ihrem jeweils ersten Schenkel 2.1, 3.1 abgewinkelten zweiten Schenkel 2.2, 3.2 unterscheiden sich in Bezug auf die Anzahl und Lage von darin eingebrachten oder angeordneten Durchgangsöffnungen 2.2a - 2.2d; 3.2a, 3.2b. Rein beispielhaft besitzt der zweite Schenkel 2.2 des einen Abschirmelements 2 insgesamt vier dieser Durchgangsöffnungen 2.2a - 2.2d, während der zweite Schenkel 3.2 des anderen Abschirmelements 3 insgesamt zwei Durchgangsöffnungen 3.2a, 3.2b besitzt. Selbstverständlich können die Abschirmelemente 2, 3 auch eine hier nicht gezeigte andere Anzahl an Durchgangsöffnungen 2.2a - 2.2d; 3.2a, 3.2b besitzen, welche sich stets an der Menge an Reihen R1, R2 von Verbindern 5 orientiert.

Im Bereich jeder Durchgangsöffnung 2.2a - 2.2d; 3.2a, 3.2b der Abschirmelemente 2, 3 sind vorliegend jeweils zwei in deren zweiten Schenkeln 2.2, 3.2 ausgebildete oder/und angeordnete Positioniermittel P2a - P2h, P3a - P3d vorgesehen. Die gezeigte Anzahl ist selbstverständlich rein beispielhaft zu verstehen und kann auch mehr oder weniger einzelne Positioniermittel P2a - P2h, P3a - P3d pro Durchgangsöffnung 2.2a - 2.2d; 3.2a, 3.2b betragen. In dem gezeigten Ausführungsbeispiel sind die Positioniermittel P2a - P2h, P3a - P3 jeweils durch ein Durchgangsloch gebildet. In jedem Fall sind wenigstens einige der Positioniermittel P2a - P2h, P3a - P3d zur Lageausrichtung des Mittelstegs 5.1 sowie eines Arms 5.2, 5.3, insbesondere seines freien Endabschnitts 5.2e, 5.3e, eines Verbinders 5 an dem zweiten Schenkel 2.2, 3.2 vorgesehen.

Weiter weist nur eines der Abschirmelemente 3 an den Enden seines zweiten Schenkels 3.2 angeordnete Führungselemente S auf, die in nicht näher dargestellter Weise der beispielsweise seitlichen Führung der Schutzabdeckung 1 entlang von Führungsschienen dienen können.

Wie zu erkennen, sind die Durchgangsöffnungen 2.2a - 2.2d; 3.2a, 3.2b der Abschirmelemente 2, 3 in Bezug auf deren Längsrichtung X zueinander versetzt, so dass die Durchgangsöffnungen 3.2a, 3.2b des weniger Durchgangsöffnungen 2.2a - 2.2d; 3.2a, 3.2b aufweisenden Abschirmelements 3 jeweils zwischen zwei Durchgangsöffnungen 2.2a - 2.2d des unmittelbar benachbarten und demgegenüber mehr Durchgangsöffnungen 2.2a - 2.2d; 3.2a, 3.2b aufweisenden Abschirmelements 2 gelegen sind. Schaut man sich die Lage der Durchgangsöffnungen 2.2a - 2.2d; 3.2a, 3.2b in Kombination mit dem in Figur 3b gezeigten Verbinder 5 an, wird der Grund hierfür deutlich. So korrespondieren die Durchgangsöffnungen 3.2a, 3.2b des weniger Durchgangsöffnungen 2.2a - 2.2d; 3.2a, 3.2b aufweisenden Abschirmelements 3 jeweils mit dem Mittelsteg 5.1 eines Verbinders 5, während jeweils zwei Durchgangsöffnungen 2.2a - 2.2d des mehr Durchgangsöffnungen 2.2a - 2.2d; 3.2a, 3.2b aufweisenden Abschirmelements 2 mit den beiden freien Endabschnitten 5.2e, 5.3e der Arme 5.2, 5.3 des Verbinders 5 korrespondieren.

Figur 5 verdeutlicht nun die Einbausituation der Verbinder 5 innerhalb der Schutzabdeckung 1 und insbesondere deren Verbindung mit den Abschirmelementen 2, 3. Wie zu erkennen, sind die Verbinder 5 einer Reihe R1, R2 mit abwechselnder Biegeform zwischen den jeweils zweiten Schenkeln 2.2, 3.2 zweier unmittelbar zueinander benachbarten Abschirmelementen 2, 3 angeordnet, so wie in einer Zusammenschau der Figur 3a mit Figur 3b bereits angedeutet. Damit sind die Arme 5.2, 5.3 zweier über diese miteinander verbundener Verbinder 5, insbesondere in einem zumindest teilweise auseinandergezogenen Zustand der Schutzabdeckung 1, in voneinander unterschiedliche Richtungen gegenüber dem zugehörigen Mittelsteg 5.1 verschwenkt.

Um die Übersichtlichkeit zu bewahren, sind die Bezugszeichen in Figur 5 im Wesentlichen auf zwei der Verbinder 5 beschränkt, gelten für die übrigen Verbinder 5 allerdings entsprechend. Der die in Figur 3a ersichtliche Biegeform aufweisende Verbinder 5 erhält nur hierin das Bezugszeichen 5a, während der die in Figur 3b ersichtliche Biegeform aufweisende Verbinder 5 nur hierin das Bezugszeichen 5b erhält.

Ersichtlich sind die Mittelstege 5.1 jeweils zweier Verbin-der 5a, 5b unter Eingliederung eines Bereichs des jeweils zweiten Schenkels 3.2 eines Abschirmelements 3 so einander angenä-hert, dass diese durch eine seiner Durchgangsöffnungen 3.2a, 3.2b hindurch miteinander verbunden sind. Demgegenüber sind die freien Endabschnitte 5.2e, 5.3e zweier Verbinder 5a, 5b unter Eingliederung eines Bereichs des jeweils zweiten Schenkels 2.2 eines unmittelbar benachbarten Abschirmelements 2 so einander angenähert, dass diese jeweils durch eine seiner Durchgangsöffnungen 2.2a - 2.2d hindurch miteinander verbunden sind. Die eigentliche Verbindung der Mittelstege 5.1 sowie freien Endabschnitte 5.2e, 5.3e zweier Verbinder 5a, 5b ist zumindest bereichsweise stoffschlüssig.

Besonders bevorzugt ist diese jeweils durch eine Verschweißung, insbesondere Ultraschallverschweißung ausgebildet. Alternativ oder ergänzend hierzu kann diese selbstverständlich auch durch eine Verklebung ausgebildet sein.

In jedem Fall ist so der Mittelsteg 5.1 eines Verbinders 5 mit dem zweiten Schenkel 2.2, 3.2 eines Abschirmelements 2, 3 verbunden, während die Arme 5.2, 5.3 dieses Verbinders 5 mit dem zweiten Schenkel 2.2, 3.2 eines unmittelbar benachbarten Abschirmelements 2, 3 verbunden sind.

Die stoffschlüssige Verbindung zwischen den einzelnen Verbindern 5 erlaubt ein überaus kompaktes Zusammendrückmaß der Schutzabdeckung 1. Durch die Anordnung der beiden Armabschnitte 5.2a, 5.2b; 5.3a, 5.3b jedes Arms 5.2, 5.3 nebeneinander ist dieses weiter reduziert, da es auch im vollständig gestauchten Zustand der Schutzabdeckung 1 zu keinem Aufeinanderliegen der Armabschnitte 5.2a, 5.2b; 5.3a, 5.3b kommen kann. Während des Verbindungsprozesses dienen die im Bereich der Durchgangsöffnungen 2.2a - 2.2d; 3.2a, 3.2b an den Abschirmelementen 2, 3 angeordneten Positioniermittel P2a - P2h, P3a - P3d in Kombination mit den an den Verbindern 5 angeordneten Positioniermitteln P5a - P5d; P5e, P5h der exakten Ausrichtung von Abschirmelementen 2, 3 und Verbindern 5 zueinander.

## Patentansprüche

1. Schutzabdeckung (1), umfassend eine Vielzahl an, insbesondere im Querschnitt jeweils L-förmigen, Abschirmelementen (2, 3), welche durch diese koppelnde Verbinder (5, 5a, 5b) relativ zueinander beweglich miteinander verkettet sind, wobei die Abschirmelemente (2, 3) jeweils einen ersten Schenkel (2.1, 3.1) und wenigstens einen gegenüber ihrem ersten Schenkel (2.1, 3.1) abgewinkelten zweiten Schenkel (2.2, 3.2) aufweisen, von denen die zweiten Schenkel (2.2, 3.2) so mit ihren Deckflächen einander gegenüberliegend angeordnet sind, dass die ersten Schenkel (2.1, 3.1) der unmittelbar zueinander benachbarten Abschirmelemente (2, 3) sich zumindest teilweise unter Ausbildung einer längenveränderlichen Abschirmfläche (4) überdecken, wobei wenigstens einer, bevorzugt jeder, der Verbinder (5, 5a, 5b) einen Mittelsteg (5.1) besitzt, welcher mindestens zwei an diesem schwenkbar angeordnete Arme (5.2, 5.3) aufweist,
**dadurch gekennzeichnet,**
**dass** der Mittelsteg (5.1) eines Verbinders (5, 5a, 5b) mit dem zweiten Schenkel (2.2, 3.2) eines Abschirmelements (2, 3) verbunden ist und wenigstens ein Arm (5.2, 5.3) dieses Verbinders (5, 5a, 5b) mit dem zweiten Schenkel (2.2, 3.2) eines unmittelbar benachbarten Abschirmelements (2, 3) verbunden ist.

2. Schutzabdeckung (1) nach Anspruch 1,
**dadurch gekennzeichnet,**
**dass** der Mittelsteg (5.1) wenigstens eines Verbinders (5, 5a, 5b) einen Auslegerbereich (5.1c) aufweist, durch den der Mittelsteg (5.1) mit dem zweiten Schenkel (2.2, 3.2) eines Abschirmelements (2, 3) verbunden ist.

3. Schutzabdeckung (1) nach einem der vorhergehenden Ansprüche,
**dadurch gekennzeichnet,**
**dass** wenigstens ein, bevorzugt jeder, Arm (5.2, 5.3) eines Verbinders (5, 5a, 5b) einen ersten Armabschnitt (5.2a, 5.3a) und einen zweiten Armabschnitt (5.2b, 5.3b) besitzt, wobei die beiden Armabschnitte (5.2a, 5.3a; 5.2b, 5.3b) eines Arms (5.2, 5.3) durch einen Zwischensteg (5.2c, 5.3c) beweglich miteinander verbunden sind.

4. Schutzabdeckung (1) nach Anspruch 3,
**dadurch gekennzeichnet,**
**dass** wenigstens ein Arm (5.2, 5.3), bevorzugt alle Arme (5.2, 5.3) eines Verbinders (5, 5a, 5b) jeweils durch ihren ersten Armabschnitt (5.2a, 5.3a) mit dem zugehörigen Mittelsteg (5.1) verbunden sind.

5. Schutzabdeckung (1) nach Anspruch 3 oder 4,
**dadurch gekennzeichnet,**
**dass** die beiden Armabschnitte (5.2a, 5.2b; 5.3a, 5.3b) eines Arms (5.2, 5.3) an derselben Kante (5.2d, 5.3d) des zugehörigen Zwischenstegs (5.2c, 5.3c) angeordnet sind.

6. Schutzabdeckung (1) nach einem der Ansprüche 3 bis 5, **gekennzeichnet durch**
eine zueinander versetze Anordnung der beiden Armabschnitte (5.2a, 5.2b; 5.3a, 5.3b) eines Arms (5.2, 5.3) an dem zugehörigen Zwischensteg (5.2c, 5.3c) derart, dass die beiden Armabschnitte (5.2a, 5.2b; 5.3a, 5.3b) jeweils in einer von zwei, insbesondere sich parallel zueinander erstreckenden, Ebenen (E1, E2) schwenkbar sind.

7. Schutzabdeckung (1) nach einem der Ansprüche 3 bis 6, **dadurch gekennzeichnet,**
**dass** die ersten Armabschnitte (5.2a, 5.3a) wenigstens zweier Arme (5.2, 5.3) oder der zwei Arme (5.2, 5.3) desselben Verbinders (5, 5a, 5b) in einer gemeinsamen Ebene (E1) schwenkbar sind.

8. Schutzabdeckung (1) nach einem der Ansprüche 3 bis 7, **dadurch gekennzeichnet,**
**dass** die zweiten Armabschnitte (5.2b, 5.3b) wenigstens zweier Arme (5.2, 5.3) oder der zwei Arme (5.2, 5.3) desselben Verbinders (5, 5a, 5b) in einer gemeinsamen Ebene (E2) schwenkbar sind.

9. Schutzabdeckung (1) nach einem der vorhergehenden Ansprüche,
**dadurch gekennzeichnet,**
**dass** wenigstens ein Arm (5.2, 5.3) eines Verbinders (5, 5a, 5b) einen, insbesondere an dessen zweiten Armabschnitt (5.2b, 5.3b) angeordneten, bevorzugt schwenkbaren, freien Endabschnitt (5.2e, 5.3e) aufweist, wobei dieser Arm (5.2, 5.3) durch seinen freien Endabschnitt (5.2e, 5.3e) mit dem zweiten Schenkel (2.2, 3.2) eines Abschirmelements (2, 3) verbunden ist.

10. Schutzabdeckung (1) nach einem der vorhergehenden Ansprüche,
**dadurch gekennzeichnet,**
**dass** der zweite Schenkel (2.2, 3.2) wenigstens eines Abschirmelements (2, 3) mindestens eine zur, insbesondere indirekten, Verbindung mit wenigstens einem Verbinder (5, 5a, 5b) ausgebildete Durchgangsöffnung (2.2a - 2.2d; 3.2a, 3.2b) besitzt.

11. Schutzabdeckung (1) nach Anspruch 10,
**dadurch gekennzeichnet,**
**dass** die Mittelstege (5.1) zweier Verbinder (5, 5a, 5b) unter Eingliederung eines Bereichs des zweiten Schenkels (3.2) durch dessen oder eine seiner Durchgangsöffnung/en (3.2a, 3.2b) hindurch miteinander verbunden sind.

12. Schutzabdeckung (1) nach Anspruch 10 oder 11,
**dadurch gekennzeichnet,**
**dass** die Arme (5.2, 5.3) zweier Verbinder (5, 5a, 5b), insbesondere deren freien Endabschnitte (5.2e, 5.3e), unter Eingliederung eines Bereichs des zweiten Schenkels (2.2) durch dessen oder eine seiner Durchgangsöffnung/en (2.2a - 2.2d) hindurch miteinander verbunden sind.

13. Schutzabdeckung (1) nach einem der Ansprüche 10 bis 12, **gekennzeichnet durch**
eine in Bezug auf eine Längsrichtung (X) der einzelnen Abschirmelemente (2, 3) versetzte Anordnung wenigstens einiger ihrer Durchgangsöffnungen (2.2a - 2.2d; 3.2a, 3.2b) derart, dass eine Durchgangsöffnung (3.2a, 3.2b) wenigstens eines Abschirmelements (3) zwischen zwei Durchgangsöffnungen (2.2a - 2.2d) eines unmittelbar benachbarten Abschirmelements (2) gelegen ist.

14. Schutzabdeckung (1) nach einem der Ansprüche 10 bis 13, **dadurch gekennzeichnet,**
**dass** die Mittelstege (5.1) oder/und die Arme (5.2, 5.3) zweier Verbinder (5, 5a, 5b), insbesondere deren freien Endabschnitte (5.2e, 5.3e), zumindest bereichsweise stoffschlüssig miteinander verbunden sind, vorzugsweise durch eine Verschweißung, bevorzugt Ultraschallverschweißung, oder/und eine Verklebung.

15. Schutzabdeckung (1) nach einem der Ansprüche 10 bis 14, **dadurch gekennzeichnet,**
**dass** im Bereich mindestens einer Durchgangsöffnung (2.2a - 2.2d; 3.2a, 3.2b) des zweiten Schenkels (2.2, 3.2) eines Abschirmelements (2, 3) zumindest ein zur Lageausrichtung des Mittelstegs (5.1) oder/und eines Arms (5.2, 5.3), insbesondere seines freien Endabschnitts (5.2e, 5.3e), eines Verbinders (5, 5a, 5b) an dem zweiten Schenkel (2.2, 3.2) ausgebildetes oder/und angeordnetes Positioniermittel (P2a - P2h, P3a - P3d) vorgesehen ist.

16. Schutzabdeckung (1) nach einem der vorhergehenden Ansprüche,
**dadurch gekennzeichnet,**
**dass** an wenigstens einem der Verbinder (5, 5a, 5b) zumindest ein an diesem ausgebildetes oder/und angeordnetes Positioniermittel (P5a - P5d, P5e - P5h) vorgesehen ist.

17. Schutzabdeckung (1) nach einem der vorhergehenden Ansprüche,
**dadurch gekennzeichnet,**
**dass** wenigstens ein Verbinder (5, 5a, 5b) mindestens eine Biegelinie (F1 - F8) aufweist, entlang der zumindest ein Teil des Verbinders (5, 5a, 5b) gegenüber einem anderen Teil desselben Verbinders (5, 5a, 5b) schwenkbar ist.

## Claims

1. Protective cover (1) comprising a plurality of screen elements (2, 3), in particular each having an L-shaped cross-section, which are linked together for movement relative to one another by connectors (5, 5a, 5b) which couple the screen elements, wherein the screen elements (2, 3) each have a first leg (2.1, 3.1) and at least one second leg (2.2, 3.2) angled relative to the first leg (2.1, 3.1), of which the second legs (2.2, 3.2) are arranged with their cover surfaces opposite one another so that the first legs (2.1, 3.1) of the screen elements (2, 3) that are immediately adjacent one another overlap one another at least in part by forming a length-variable screen surface (4), wherein at least one, preferably each, connector (5, 5a, 5b) has a centre web (5.1) which has at least two arms (5.2, 5.3) arranged in pivotal manner thereon,
**characterised in that**
the centre web (5.1) of a connector (5, 5a, 5b) is connected to the second leg (2.2, 3.2) of a screen element (2, 3) and at least one arm (5.2, 5.3) of this connector (5, 5a, 5b) is connected to the second leg (2.2, 3.2) of an immediately adjacent screen element (2, 3).

2. Protective cover (1) according to Claim 1,
**characterised in that**
the centre web (5.1) of at least one connector (5, 5a, 5b) has an extension region (5.1c) by means of which the centre web (5.1) is connected to the second leg (2.2, 2.3) of a screen element (2, 3).

3. Protective cover (1) according to one of the preceding claims,
**characterised in that**
at least one, preferably each, arm (5.2, 5.3) of a connector (5, 5a, 5b) has a first arm portion (5.2a, 5.3a) and a second arm portion (5.2b, 5.3b) wherein the two arm portions (5.2a, 5.3a; 5.2b, 5.3b) of one arm (5.2, 5.3) are connected in movable manner to one another by an intermediate web (5.2c, 5.3c).

4. Protective cover (1) according to Claim 3
**characterised in that**
at least one arm (5.2, 5.3), preferably all arms (5.2, 5.3), of a connector (5, 5a, 5b) are each connected to the associated centre web (5.1) by their first arm portion (5.2a, 5.3a).

5. Protective cover (1) according to Claim 3 or 4 **characterised in that**
the two arm portions (5.2a, 5.2b; 5.3a, 5.3b) of one arm (5.2, 5.3) are arranged on the same edge (5.2d, 5.3d) of the associated intermediate web (5.2c, 5.3c)

6. Protective cover (1) according to one of Claims 3 to 5 **characterised by**
a mutually offset arrangement of the two arm portions (5.2a, 5.2b; 5.3a, 5.3b) of one arm (5.2, 5.3) on the associated intermediate web (5.2c, 5.3c) so that the two arm portions (5.2a, 5.2b; 5.3a, 5.3b) are each capable of pivoting in one of two planes (E1, E2) that in particular extend parallel to one another.

7. Protective cover (1) according to one of Claims 3 to 6 **characterised in that**
the first arm portions (5.2a, 5.3a) of at least two arms (5.2, 5.3) or the two arms (5.2, 5.3) of the same connector (5, 5a, 5b) are capable of pivoting in a common plane (E1).

8. Protective cover (1) according to one of Claims 3 to 7 **characterised in that**
the second arm portions (5.2b, 5.3b) of at least two arms (5.2, 5.3) or the two arms (5.2, 5.3) of the same connector (5, 5a, 5b) are capable of pivoting in a common plane (E2).

9. Protective cover (1) according to one of the preceding claims,
**characterised in that**
at least one arm (5.2, 5.3) of a connector (5, 5a, 5b) has a free end portion (5.2e, 5.3e) arranged in particular on its second arm portion (5.2b, 5.3b) and preferably in pivotal manner, wherein this arm (5.2, 5.3) is connected by its free end portion (5.2e, 5.3e) to the second leg (2.2, 3.2) of a screen element (2, 3).

10. Protective cover (1) according to one of the preceding claims
**characterised in that**
the second leg (2.2, 3.2) of at least one screen element (2, 3) has at least one through opening (2.2a - 2.2d; 3.2a, 3.2b) configured for the, in particular indirect, connection with at least one connector (5, 5a, 5b).

11. Protective cover (1) according to Claim 10
**characterised in that**
the centre webs (5.1) of two connectors (5a, 5a, 5b) are connected to one another by incorporating a region of the second leg (3.2) through its, or one of its, through openings (3.2a, 3.2b).

12. Protective cover (1) according to Claim 10 or 11 **characterised in that**
the arms (5.2, 5.3) of two connectors (5, 5a, 5b), in particular their free end portions (5.2e, 5.3e), are connected to one another by incorporating a region of the second leg (2.2) through its, or one of its, through openings (2.2a - 2.2d).

13. Protective cover (1) according to one of Claims 10 to 12
**characterised by**
an arrangement of at least some of its through openings (2.2a-2.2d; 3.2a, 3.2b) offset in relation to a longitudinal direction (X) of the individual screen elements (2, 3) so that one through opening (3.2a, 3.2b) of at least one screen element (3) is placed between two through openings (2.2a - 2.2d) of an immediately adjacent screen element (2).

14. Protective cover (1) according to one of Claims 10 to 13
**characterised in that**
the centre webs (5.1) and/or the arms (5.2, 5.3) of two connectors (5, 5a, 5b), in particular their free end portions (5.2e, 5.3e), are connected to one another through material bonding in at least some areas, preferably by welding, preferably ultrasonic welding, and/or adhesion.

15. Protective cover (1) according to one of Claims 10 to 14
**characterised in that**
there is provided in the region of at least one through opening (2.2a- 2.2d; 3.2a, 3.2b) of the second leg (2.2, 3.2) of a screen element (2, 3) at least one positioning means (P2a - P2h, P3a - P3d) which is configured and/or arranged for the position alignment of the centre web (5.1) and/or an arm (5.2, 5.3), in particular its free end portion (5.2e, 5.3e), of a connector (5, 5a, 5b) on the second leg (2.2, 3.2).

16. Protective cover (1) according to one of the preceding claims
**characterised in that**
at least one positioning means (P5a - P5d, P5e - P5h) is provided on at least one of the connectors (5, 5a, 5b) and is formed and/or arranged thereon.

17. Protective cover (1) according to one of the preceding claims
**characterised in that**
at least one connector (5, 5a, 5b) has at least one bending line (F1-F8) along which at least one part of the connector (5, 5a, 5b) can pivot opposite another part of the same connector (5, 5a 5b).

## Revendications

1. Couvercle de protection (1) comportant une pluralité d'éléments de blindage (2, 3), en particulier en forme de L en coupe transversale, qui sont enchaînés les uns aux autres de manière mobile les uns par rapport aux autres par des connecteurs qui les accouplent, dans lequel les éléments de blindage (2, 3) comportent chacun une première branche (2.1, 3.1) et au moins une deuxième branche (2.2, 3.2) coudée par rapport à leur première branche (2.1, 3.1),
dont les deuxièmes branches (2.2, 3.2) sont disposées avec leurs surfaces de recouvrement opposées l'une à l'autre de telle sorte que les premières branches (2.1, 3.1) des éléments de blindage (2, 3) directement voisins les uns des autres se recouvrent au moins partiellement en formant une surface de blindage (4) de longueur variable, dans lequel au moins un connecteur, de préférence, chaque connecteur (5, 5a, 5b) comporte une âme centrale (5.1) qui présente au moins deux bras (5.2, 5.3) disposés de manière pivotante sur celle-ci,
**caractérisé en ce**
**que** l'âme centrale (5.1) d'un connecteur (5, 5a, 5b) est liée à la deuxième branche (2.2, 3.2) d'un élément de blindage (2, 3) et au moins un bras de ce connecteur (5, 5a, 5b) est lié à la deuxième branche (2.2, 3.2) d'un élément de blindage (2, 3) directement voisin.

2. Couvercle de protection (1) selon la revendication 1, **caractérisé en ce**
**que** l'âme centrale (5.1) de l'au moins un connecteur (5, 5a, 5b) comporte une zone de cantilever (5.1c) à travers laquelle l'âme centrale (5.1) est liée à la deuxième branche (2.2, 3.2) d'un élément de blindage (2, 3).

3. Couvercle de protection (1) selon l'une quelconque des revendications précédentes,
**caractérisé en ce**
**qu'**au moins un bras (5.2, 5.3), de préférence, chaque bras (5.2, 5.3) d'un connecteur (5, 5a, 5b) comporte une première partie de bras (5.2a, 5.3a) et une deuxième partie de bras (5.2b, 5.3b), dans lequel les deux parties de bras (5.2a, 5.3a; 5.2b, 5.3b) d'un bras (5.2, 5.3) sont liés entre eux de manière mobile par une âme intermédiaire (5.2c, 5.3c).

4. Couvercle de protection (1) selon la revendication 3, **caractérisé en ce**
**qu'**au moins un bras (5.2, 5.3), de préférence, tous les bras (5.2, 5.3) d'un connecteur (5, 5a, 5b) sont chacun liés à l'âme centrale (5.1) correspondante par leur première partie de bras (5.2a, 5.3a)

5. Couvercle de protection (1) selon la revendication 3 ou 4,
**caractérisé en ce**
**que** les deux parties de bras (5.2a, 5.2b; 5.3a, 5.3b) d'un bras (5.2, 5.3) sont disposées sur le même bord (5.2d, 5.3d) de l'âme intermédiaire (5.2c, 5.3c) correspondante.

6. Couvercle de protection (1) selon l'une quelconque des revendications 3 à 5,
**caractérisé par**
un agencement décalé des deux parties de bras (5.2a, 5.2b; 5.3a, 5.3b) l'un par rapport à l'autre d'un bras (5.2, 5.3) sur l'âme intermédiaire (5.2c, 5.3c) de telle sorte que les deux parties de bras (5.2a, 5.2b; 5.3a, 5.3b) puissent pivoter chacune dans l'un des deux plans (E1, E2) s'étendant en particulier parallèlement l'un à l'autre.

7. Couvercle de protection (1) selon l'une quelconque des revendications 3 à 6,
**caractérisé en ce**
**que** les premières parties de bras (5.2a, 5.3a) de l'au moins deux bras (5.2, 5.3) ou des deux bras (5.2, 5.3) du même connecteur (5, 5a, 5b) peuvent pivoter dans un même plan (E1).

8. Couvercle de protection (1) selon l'une quelconque des revendications 3 à 7,
**caractérisé en ce**
**que** les deuxièmes parties de bras (5.2, 5.3b) de l'au moins deux bras (5.2, 5.3) ou des deux bras (5.2, 5.3) du même connecteur (5, 5a, 5b) peuvent pivoter dans un même plan (E2).

9. Couvercle de protection (1) selon l'une quelconque des revendications précédentes,
**caractérisé en ce**
**que** l'au moins un bras (5.2, 5.3) d'un connecteur (5, 5a, 5b) comporte une section d'extrémité libre (5.2e, 5.3e), de préférence pivotante, disposée en particulier sur sa deuxième partie de bras (5.2b, 5.3b), dans lequel ce bras (5.2, 5.3) est lié à la deuxième branche (2.2, 3.2) d'un élément de blindage (2, 3) par sa section d'extrémité libre (5.2e, 5.3e).

10. Couvercle de protection (1) selon l'une quelconque des revendications précédentes,
**caractérisé en ce**
**que** la deuxième branche (2.2, 3.2) de l'au moins un élément de blindage (2, 3) comporte au moins une ouverture de passage (2.2a - 2.2d; 3.2a, 3.2b) formée pour le raccordement, surtout indirect, à l'au moins un connecteur (5, 5a, 5b).

11. Couvercle de protection (1) selon la revendication 10, **caractérisé en ce**
**que** les âmes centrales (5.1) de deux connecteurs (5, 5a, 5b) sont liées l'une à l'autre à travers son ouverture de passage ou une de ses ouvertures de passage (3.2a, 3.2b) en intégrant une zone de la deuxième branche (3.2).

12. Couvercle de protection (1) selon la revendication 10 ou 11,
**caractérisé en ce**
**que** les bras (5.2, 5.3) de deux connecteurs (5, 5a, 5b), surtout leurs sections d'extrémité libre (5.2e, 5.3e), sont liées l'une à l'autre à travers son ouverture de passage ou une de ses ouvertures de passage (2.2a - 2.2d) en intégrant une zone de la deuxième branche (2.2)

13. Couvercle de protection (1) selon l'une quelconque des revendications 10 à 12,
**caractérisé par**
un agencement décalé par rapport à une direction longitudinale (X) des éléments de blindage individuels (2, 3) d'au moins certaines de leurs ouvertures de passage (2.2a - 2.2d; 3.2a, 3.2b), de sorte qu'une ouverture de passage (3.2a, 3.2b) d'au moins un élément de blindage (2, 3) est située entre deux ouvertures de passage (2.2a - 2.2d) d'un élément de blindage (2.3) immédiatement voisin.

14. Couvercle de protection (1) selon l'une quelconque des revendications 10 à 13,
**caractérisé en ce**
**que** les âmes centrales (5.1) ou/et les bras (5.2, 5.3) de deux connecteurs (5, 5a, 5b), surtout leurs sections d'extrémité libre (5.2e, 5.3e) sont liés entre eux au moins par zones par une liaison de matière, de préférence, par soudage, de préférence, par soudage par ultrasons ou/et par collage.

15. Couvercle de protection (1) selon l'une quelconque des revendications 10 à 14,
**caractérisé en ce**
**que** dans la région de l'au moins une ouverture de passage (2.2a - 2.2d; 3.2a, 3.2b) de la deuxième branche (2.2, 3.2) d'un élément de blindage (2, 3) est prévu au moins un moyen de positionnement (P2a - P2h, P3a - P3d) sur la deuxième branche (2.2, 3.2) conçu ou/et agencé pour l'orientation en position de l'âme centrale (5.1) ou/et d'un bras (5.2, 5.3), en particulier de sa section d'extrémité libre (5.2e, 5.3e), d'un connecteur (5, 5a, 5b).

16. Couvercle de protection (1) selon l'une quelconque des revendications précédentes,
**caractérisé en ce**
**qu'**il est prévu sur au moins l'un des connecteurs (5, 5a, 5b) au moins un moyen de positionnement (P5a - P5d, P5e - P5h) formé ou/et disposé sur celui-ci.

17. Couvercle de protection (1) selon l'une quelconque des revendications précédentes,
**caractérisé en ce**
**que** l'au moins un connecteur (5, 5a, 5b) comporte au moins une courbe de flexion élastique (F1 - F8), le long de laquelle au moins une partie du connecteur (5, 5a, 5b) est pivotante par rapport à une autre partie du même connecteur (5, 5a, 5b).
